# EUROPEAN PATENT SPECIFICATION

(11) **EP 0 380 153 B1**
(45) Date of publication and mention of the grant of the patent: **07.07.1993**
(21) Application number: 90200072.8
(22) Date of filing: 11.01.1990
(51) Int. Cl.: G01D 5/34, G01D 5/26

(54) **Fibre optics system for on-the-spot and/or remote detection and control of various values and variations of same**
System optischer Fasern zur Detektierung und Kontrolle einiger Werte und ihrer Variationen am Messort und/oder in Distanz
Système à fibres optiques pour détecter et contrôler sur place ou/et à distance plusieurs valeurs et leurs variations

(30) Priority: 24.01.1989 IT 6703689; 24.11.1989 IT 6804089
(43) Date of publication of application: 01.08.1990
(73) Proprietor: Cianfriglia, Roberto, I-10099 San Mauro Torinese Turin (IT)
(72) Inventor: Cianfriglia, Roberto, I-10099 San Mauro Torinese Turin (IT)
(74) Representative: de Blasio, Francesco

(56) References cited:
- EP-A- 0 013 971
- EP-A- 0 096 152
- WO-A-84/04439
- FR-A- 2 595 851
- US-A- 4 204 115
- US-A- 4 320 293

## Description

The use of gases compressed at high pressure, enclosed in metal containers which, for security reasons are placed in specially built premises, distant from the location(s) of use, are known, as is the use of thermometrical and/or barometrical instruments situated, for example, in boiler rooms, to indicate the internal temperature of the boilers and/or of the surrounding environment as well as the running pressure of the fluid used. For safety reasons, data collected on site is frequently transmitted by remote control to the control console.

In cases where flammable and/or explosive gases are used, particularly in industrial fields, the use of intrinsic safety devices is essential for flameproofing purposes.

The safety equipment known to date, although fulfilling the tasks for which it is designated, is extremely costly and, in some cases, presents functional limits and installation difficulties which cannot always be overcome.

The invention concerns a control system comprising simply structured control and detection means, economically convenient, suitable for on-the-spot and/or remote detection and transmission of data collected by means of suitable measuring instruments as long as they are provided with a mobile organ sensitive to the variations of the values controlled.

In view of the purpose described above, the device according to the invention is characterized by claim 1. Preamble of claim 1 is based on prior art, e.g., known from WO-A-84/04439. The invention takes advantage of the variations in the luminous intensity caused by the action of a mobile filter having variable transparency, or with a pre-established code imprinted, inserted in a fibre optics circuit crossed by a beam of light which, at origin, has a constant intensity as it is emitted by a suitable source. Said filter is associated to mechanisms activated by the variations of the value controlled. The various positions of the filter, with respect to the luminous beam intercepted, cause variations in the luminous intensity transmitted to the part of the fibre optics circuit downstream from the filter connected to the central control and detection console.

Another characteristic of the system derives from the variations of the value controlled, such as pressure, temperature and the like, which generate movement of the filter and are subsequently transformed into variations in luminous intensity, reaching a detection device which transforms them into electric signals which activate luminous and/or acoustic signals. A display with digital indications is provided.

A further characteristic of the system is that the mobile filter is activated and set in motion by an instrument which measures the value controlled.

According to a structural variant the system comprises a circuit made up of -n- fibre optics, one extremity of which is connected to a source of constant luminous intensity while the opposite extremity is connected to an electronic detector capable of transforming the luminous signals into electric digital pulses. The fibre optics circuit is part of a transductor comprising a transparent filter having an imprinted coded track. The filter is associated to the mobile organ of the measuring instrument intercepting the luminous beam that crosses the fibre optics so that the transductor reads the logic signals transmitted to an electronic detector.

An example of advantageous use of the system, described below, is to be found in the control of the pressure of gases compressed in special metal containers, particularly if they form batteries of more than one element or cylinder, whether or not interconnected, placed in specially structured deposits, destined to feed various equipment situated at a distance.

The general characteristics of the system according to the invention, with reference to the above mentioned example, are described below with reference to the attached drawings in which:
- Figures 1, 2 and 3 schematically illustrate three variants of similar units in which the system is used connected to cylinders or batteries of cylinders containing compressed gases;
- Figure 4 is an exploded perspective view of an example of the system;
- Figure 5 is an enlarged particular of Figure 4;
- Figure 6 illustrates the upper part of one of the cylinders illustrated in Figures 1, 2 and 3; and, in an exploded axonometric view, the parts comprising the system which, with respect to the view in Figure 4, are tilted by 180° on the vertical plane passing through the axis X-X;
- Figure 7 is a plane view of an example of the variable transparency filtering element;
- Figure 8 is a perspective view of an example of a preferred form of the control console remotely connected to the gas deposit under control;
- Figure 9, similar to Figure 4, illustrates a structural variant of the system;
- Figure 10 illustrates a variant of the filtering element shown in figure 7;
- Figure 11 represents a variant of the organs illustrated in Figure 5;
- Figure 12 illustrates the system partially assembled.

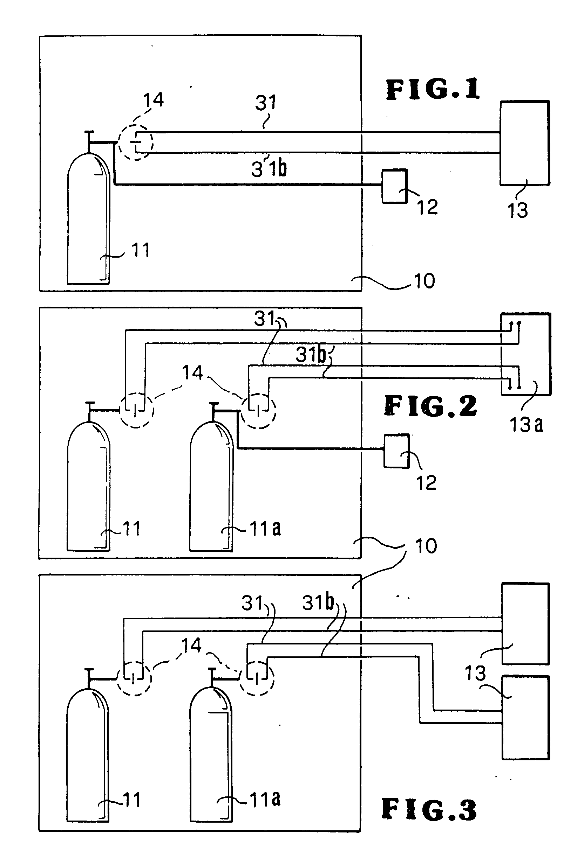

In the drawings, with reference to the illustrations in Figures 1, 2 and 3, 10 indicates the deposit premises for one or more containers 11, 11a of compressed gas; 12 indicates the gas point, dislocated at a distance; 13 indicates control consoles for each container 11 and 13a indicates a multiple control console for two or more containers, said control being situated, for example, in the premises used for the gas, or elsewhere, anyway distant from the premises 10. 14 indicates the device as a whole.

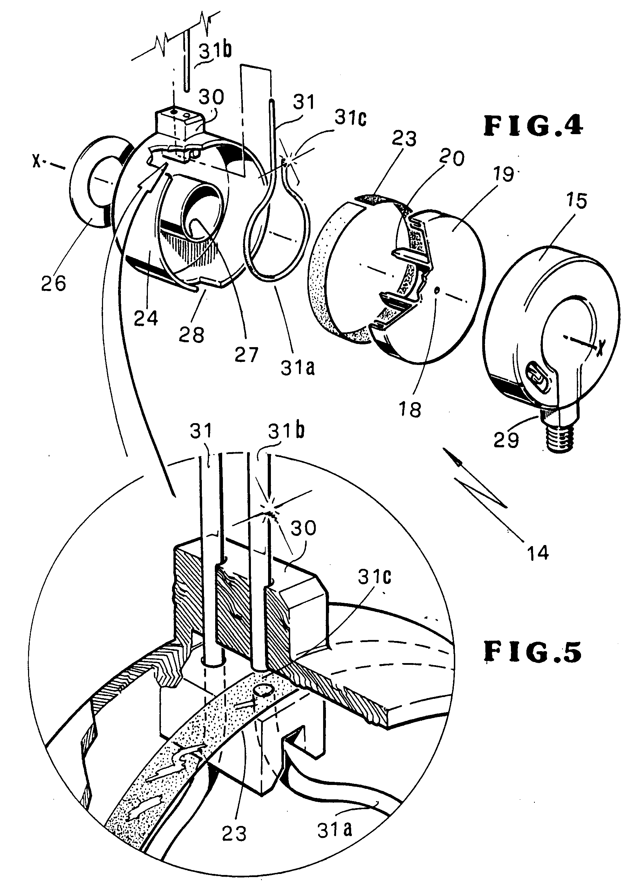

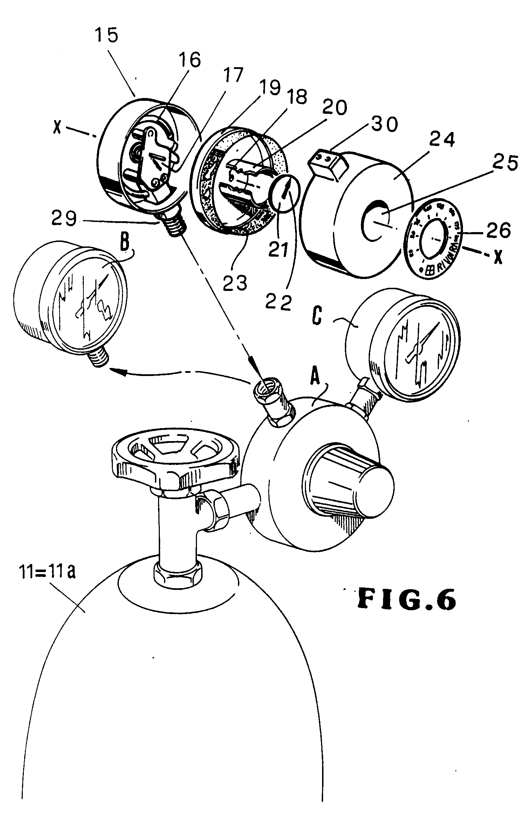

The device 14, in the example of use described, is provided with a tubular spring manometric instrument 16, or "Bourdon" tube, Figs. 4, 5 and 6, contained in the casing 15. The pressure of the gas present in the containers 13, or 13a, Fig. 6, admitted into the spring 16 causes the elastic deformation of said spring and consequent radial movements, transformed into angular movements, of the shaft 17, as known.

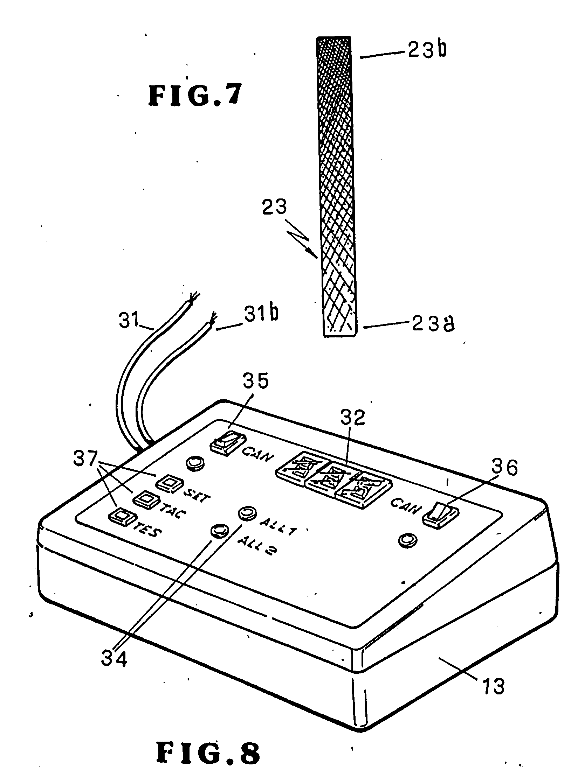

In the system according to the invention, a plate 19 is connected to the shaft 17, in position 18, in place of a pointer, joined to the tube 20, to the disk 21 with pointer 22, and frontally as an extension of the plate 19; a variable transparency anular filter 23 is attached, the development of which is illustrated in plane view in Figure 7. The filter 23, which in the case illustrated is in a flexible plastic material, from one extremity 23a, totally transparent, in its lengthwise development increases in opacity until at the opposite extremity 23b, it is totally opacified.

The equipment 19, 20, 21, 22 and 23 follows the angular movements of the shaft 17 and is protected by the cup-shaped container 24, said container having a holed bottom in 25, Figure 6, from which the extremity of the tube 20 projects spirally, said tube being joined to the plate 19 and bottom plate 21 with pointer 22 angularly mobile with respect to the circular dial 26, fixed to the bottom of the container 24, which fits onto the casing 15.

The tube 20, Figure 4, joined to the plate 19, is telescopically housed in the collar 27 in which it rotates freely. Said collar 27 is joined to the casing 24. The hollow seat 28, placed on the edge of the casing 24, receives the top of the connection 29 joined to the casing 15, the fixed position of which it determines during assembly of the device.

The casing 24 is provided with the radial projection 30, Figs. 4 and 5, crossed by one or more fibre optics which form the luminous conductors of a circuit which, originating at a distance and fed by a constant intensity luminous source associated to an electronic circuit of a known type, enters the casing 24 by means of the branch 31, forms the ring 31a which surrounds the collar 27 and is bent in such a way that the branch coming out 31b is aligned to the branch entering 31.

The outlet branch 31b, downstream of the interruption 31c, generally follows the trajectory of the inlet branch 31; it reaches the control unit and is connected to a photoresistance subjected to the luminous signals in arrival which are transformed into electric signals, processed by an electronic circuit and shown on a display which is part of, or anyway associated to, the control console 11 or 11a, situated at a convenient distance, Figs. 1, 2, 3 and 7. The anular screen 23 is inserted, without contact, into the space 31c, which is created by a cut having a width of a few millimetres in the branch 31b, protected by the casing 24. The organs of the device assembled take on the appearance of a barometer such as that indicated with -B- or -C- in Fig. 6, said device also being capable of supplying indications relating to the variations in pressure thanks to the pointer 22 and dial 26.

The use and functioning of the device are described below.

At any suitable point of a pressurized gas duct, the device is pneumatically connected by means of the connection 29.

In some cases, for installations already in use, it is advisable to proceed as follows:
- with reference to Figures 1 and 6, the manometer -B- is removed from a pressurized gas duct or from a container 11, 11a to be controlled - pneumatically connected to a known pressure reducer -A- provided with a manometer -B- which measures the internal pressure of the compressed gas and with a second manometer -C- for controlling the running pressure of the gas in output. In place of the manometer removed, the described device is pneumatically connected by means of the connection 29.

In these conditions the pressure of the gas acting on the spring 16 forces angular positions, which correspond to a specific sector of transparency of the filter 23, on the shaft 17, plate 19 and filter 23. The intensity of the luminous beam, intercepted in 31c and transmitted in 31b, is inversely proportional to the local opacity of the filter 23. The luminous beam controlled in this way, crossing the branch 31b of the fibre optics circuit, reaches the control console 13 on the display 32 on which digital signals appear, indicating the pressure of the gas sent forward to the position of use, Figs. 1, 2 and 3.

The console 13 is provided with luminous signals 33, 34 and switches 35, 36 for controlling the internal pressure of the containers connected a single devices 14.

From an economic point of view, the use of fibre optics in synthetic material is preferable although this requires the limitation of the lengthwise extension of the circuit that connects the luminous source to the transductor and to the control console. To overcome this problem, the group comprises the luminous source and the receiver of the light variations can be connected at a short and convenient distance, outside the premises containing the means controlled by the device. The signal received from said outside group, not distant from the premises 10, transformed into an electric signal, can be transmitted to any distance required.

As previously stated, the structure and the geometrical shape of the variable opacity filter can anyway be different from the filter 23 in Figure 7. Said organ can be in glass or other material suitable for taking on the shape of a flat beam that can be set into alternate rectilinear movement, with the use of adequate transmission organs.

In the device described above the analog luminous variations generated by the filter 23 and transmitted to the detector are transformed into eletric signals transmitted to the control console from which, in real time, the logic information on the values controlled is received.

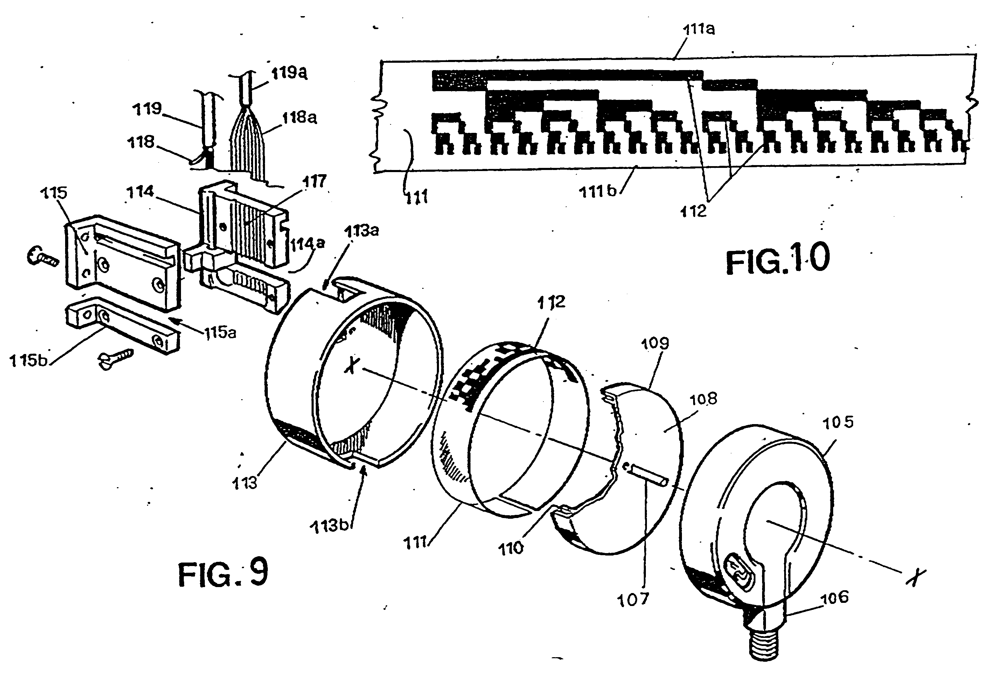

With reference to Figures 9 to 12, a perceivable structural variant of the device is described below, in which the luminous signal transmission circuit is made up of -n- fibre optics intercepted by a transparent filter, which crosses the fibre optics circuit and brings forward, imprinted, a coded track which allows the electronic detector to transform the luminous signals into electric digital pulses which can subsequently be read as logic signals by a transductor. More precisely, the device comprises four sections.
Section I: made up of a d.c. feeder, protected against short-circuits, employed for feeding the other three sections and furthermore comprising the luminous source for a fibre optics beam. Said source can be made up of: - a low voltage filament lamp; - or by a series of LEDs operating in the visible band; - or by a series of LEDs operating in the infrared band, or again by any other source of constant luminosity.
Section II: comprising the transductor, which is the essential organ for activating the system and furthermore comprising a transparent filter in the form of a strip or tape in plastic material, glass or any other transparent material on which a coded track is imprinted made up of black impressions arranged in a suitable way. Said filter is firmly joined to the mobile organ of the measuring instrument and intercepts the light which, originates from the feeder and crosses the fibre optics beam. The luminous signals downstream of the transductor reach, in code, an electronic detector device.
Section III: detector: comprising an electronic device has the function of transforming the luminous signals into electric digital pulses and therefore accepts, on entrance, the signal supplied by the fibre optics and supplies, on exit, a corresponding binary code.
Section IV: is made up of a display which illustrates, in real time, the information immediately taken by the measuring instrument; the display can be made up of: an adequately sized luminous display; or by a liquid crystal display; or by a television monitor.

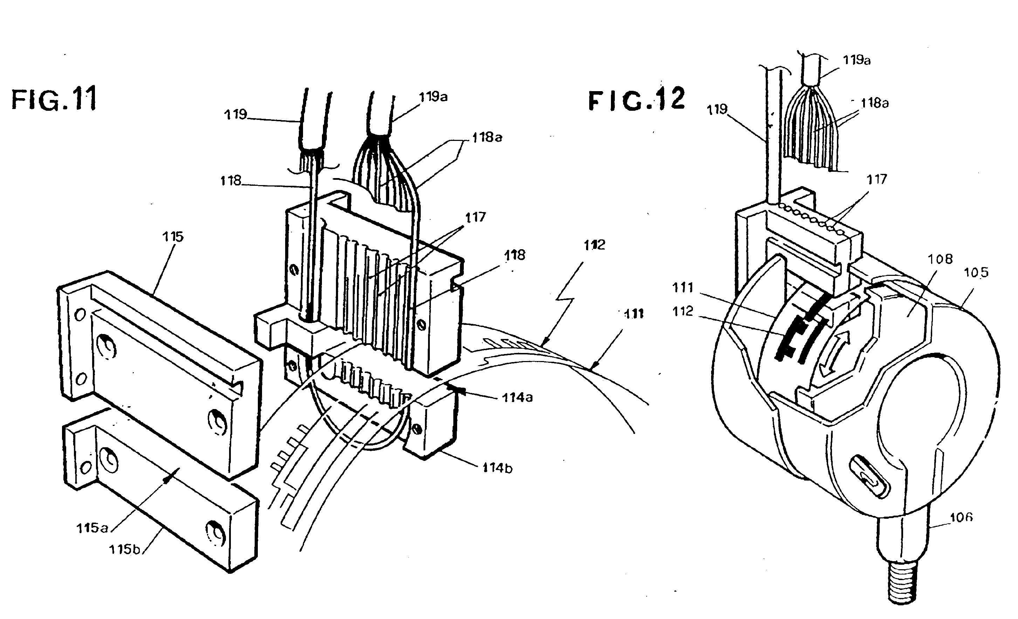

With reference to Figure 9, 105 indicates the outside casing of a manometer provided with a connection 106 for connection to the fluid container the pressure of which it is necessary to measure constantly. The casing 105 contains the organ which is sensitive to the pressure, not illustrated, of any known type, and the devices for setting the shaft 107 into angular movement, connected to the index of the pointer of the instrument. The plate 108 is centrally joined to said shaft, said plate being provided with a perimetral edge 109 frontally grooved in 110. In the anular groove 110, one of the free edges 111a or 111b of the filter 111, Figure 10, is inserted or anyway linked, said free edge being in transparent plastic material or in any other suitable material, bearing imprinted, black impressions 112 on the coded track. Said impressions can however be arranged in a different way as long as they define a pre-established code. The plate 108, together with the tape 111, is coaxially slidably mounted around the axis X-X and in the anular part 113 provided with radial windows 113a and 113b. An instrument assembled to the window 113b is occupied by the leg 106 of the casing 105 while the window 113a is occupied by a support which, in the example illustrated, is made up of the parts 114, 115 and 115b which are complementary and face to face. The face to face surfaces of said parts are provided with parallel channels 117. The part 114 of the support is provided with the notch 114a which coincides with the space 115a which is pre-established between the parts 115 and 115b. The filter 111 associated to the plate 108 projects into the space 114a, 115a. Single fibre optics 118 originating from a beam of fibres 119 are housed in the channels 117 of the assembled parts of the support. The fibres 118 enter between the parts 114b-115b of the support, mounted as illustrated in Figure 11, where for the purpose of greater clearness, only one fibre of the beam is illustrated. All the fibres 118 of the beam 119, interrupted in correspondence with the space 114a-115a, on leaving the support reconstitute the beam 119a, Figs. 9, 11 and 12.

The free end of the part 119 of the cable, whose fibres enter by means of the parts 114b, 115b of the support, is connected to a constant intensity luminous source. The part 119a of the same cable, on leaving said support, is connected to an electronic detector, not illustrated. The beam of fibres 118-118a, in said support in a flat position, is interrupted in 114a-115a, therefore the light that crosses said fibres is intercepted by the coded track of the tape 111, Figure 12.

The system and relative device allow for absolute or boosted detection to be effected.

In cases where it is desired to effect absolute detection, the code 112 imprinted on the filter 111 should be such that the single angular positions of the same correspond to specific values taken by the measuring instrument. A code corresponds to each point, said code when properly decoded, expressing a precise numeric value. Consequently, the precision of the data supplied depends on the length of the code and on the number of fibres used, such elements being interdependent factors.

If it is desired to evaluate a shift of 200mm in width with the resolution of 1mm, it is necessary to have a filter or tape available, provided with 200 coded signs on the length of 200mm. The single signs should be distinct one from the other so as to allow the positions of the indicating organ and code to be placed in biunivocal correspondence. In this case the nature of the code can only be binary, for obvious reasons of reliability and construction standards. The kind of code is not however binding.

In the case of boosted detection, it is necessary to operate according to substantially different criteria, carrying out the count of the positions passed through from the beginning, therefore in the case of the previous example it will be necessary to have a filter 111 available, 200mm long with 200 transparent impressions imprinted, alternated by 200 dark impressions. In this case it is necessary to have available a fibre optic to bring the light and a fibre optic to pick up the count signal.

The internal structure of the feeder, of the display detector and of the coded filter 111 is conditioned by the choice between the two types of detection to be made.

The device is compatible for use in C-MOS logic circuits or, in the version suitable for boosted detection, for use on a microprocessor of the same family.

The use of a microprocessor is also indispensable for running the device in association with the use of a monitor and/or for access to the network.

The use of analog integrated circuits in the construction of the detector, allows for the use of electronic components for superficial assembly so as to obtain a high level of miniaturization of the unit.

The device according to the subject system is considerably flexible and therefore its application to monitoring the value of a pressure with the use of a manometer for the absolute detection of values, with the use of the coded track 112, as shown in Figure 10, is a non-limiting example.

In the example described the device comprises a feeder, whose luminous source is an incandescent lamp and, as an alternative, it is provided with a series of LEDs operating on the green. The electric feed of both the luminous sources is controlled for the purpose of indicating, even at a distance, any interruption in the luminous flow which could cause erroneous reading of the values controlled.

The signal is picked up by use of photodiodes and of a decoder device with rated sensitivity.

According to a further variant, not illustrated, the transductor can be provided with only one fibre optic 118, in arrival, associated to a prism which generates a light pen which covers the track 112 and transmits to the beam of fibres in output 118a, the light variations determined by the impressions of the coded track 112. Without altering the characteristics of the system and of the device, such a solution is economically advantageous for the use of a single fibre optic arriving at the transductor support.

The activation of the system and the use of a suitable device allow for transmissions of the code to be effected at a considerable distance thereby providing telemetering operations on remote points, making use of the telephone network and/or of computer networks for monitoring in real time. In this case a comparison can be made with a threshold value set by the operator and in the case of equality between the value set and the value detected, the activation of an alarm signal can be provided for, such as an acoustic signal. An external, acoustic signal of an alarm threshold can be obtained by means of three micro-deflectors and relative electric contacts.

The device is particularly useful for telemetering operations. It is possible to distance the transductor unit from the display unit either by acting on the length of the fibre optics, or by acting on the length and the nature of the electric connections.

The advantages to be derived from the use of the device according to the subject system are considerable and can be summarized as follows:
- measurements of particulars in movement in very reduced spaces can be made;
- it is possible to made measurements in environments having a high degree of intrinsic danger, such as deposits of compressed gas containers, of flammable liquids and the like.

In each case, the result is considerably advantageous thanks to the digital conversion of information of any kind.

## Claims

1. Fibre optics system for the instant measurement of the variations of values of different physical entities (31) connected to a luminous source, comprising a measuring instrument (16) provided with a mobile organ (17) which is sensitive to the variations of the value controlled, connected to a filter (23), of variable transparency, which intercepts the luminous beam of the fibre optics, characterised in that while the measuring device is positioned within the physical entities controlled in absolute values and variations of values of same, the relative data is transmitted, at a distance from said positioning, by means of a fibre optics circuit; further by a device that comprises:
- an electricity feeder, situated at any safe distance from the position of the entities controlled;
- a transducer unit for the signals arriving;
- a detector (14) situated within the seat of the values controlled;
- a control console (13) for reading the data measured.

2. System according to Claim 1, characterised in that it comprises a unipolar circuit of fibre optics (31, 31a-31b), with one end of said circuit connected to a luminous source having constant intensity while the opposite end, by means of a transducer (14) is connected to an electronic device.

3. System according to Claim 1, in which the luminous beam which runs through the fibre optics (31), is intercepted by a filter (23) having variable transparency connected to an angularly mobile organ (17) of a measuring instrument; whereby the angular movements of the filter (23) induce variations of the luminous intensity in the fibre optics circuit, which variations are generated by the variations of the values controlled and transmitted, at a distance, transformed into digital signals.

4. System according to Claim 1 characterised in that the electricity feed section of the luminous source, positioned at a distance from the position of the entity controlled, is fed by direct current and is associated to either a beam of fibre optics or one single fibre optic (19, 19a-119, 199a), whereby said source is constituted by a lamp fed at low tension.

5. System according to Claim 1, in which the luminous source associated to the fibre optics circuit is made up of LEDs operating in the visible band.

6. System according to Claim 1, in which the luminous source is made up of LEDs operating in the infra-red band.

7. System according to Claim 1, characterised in that the transducer comprises a support (114-115) with -n- parallel and coplanar channels for the same number of fibre optics (118-118a) transversely interrupted in correspondence with a window (114a-115a) of the support in which runs a transparent screen (111) carrying a code (112); said screen being connected to the mobile organ of the measuring instrument.

## Patentansprüche

1. Lichtleitfaser-System zur augenblicklichen Aufnahme der Wertänderungen unterschiedlicher physikalischer Grössen (31), das mit einer Lichtquelle verbunden ist und ein mit einem beweglichen Glied (17) versehenes Aufnahmegerät (16) aufweist, das gegen die Änderungen des gemessenen Wertes empfindlich und mit einem Filter (23) mit veränderlicher Lichtdurchlässigkeit verbunden ist, der das Lichtbündel der Lichtleitfasern auffängt, dadurch gekennzeichnet, dass während das Aufnahmegerät im Inneren der physikalischen Grössen zur Messung der Absolutwerte und der Wertänderungen derselben angeordnet ist, die entsprechenden Daten über eine Lichtleitfaser-Schaltung auf einen bestimmten Abstand von dieser Position übertragen werden und dass es eine Vorrichtung umfasst, die aus folgenden Teilen besteht:
- einem Schaltnetzteil, der an einem beliebigen Sicherheitsabstand von der Position der zu kontrollierenden Grössen angeordnet ist,
- einer Gebereinheit für die ankommenden Signale,
- einem am Ort der zu kontrollierenden Werte angeordneten Messgeber (14),
- einem Steuerpult (13) zum Ablesen der aufgenommenen Daten.

2. System nach Anspruch 1, dadurch gekennzeichnet, dass es eine einpolige Lichtleitfaser-Schaltung (31, 31 a-31b) umfasst, wobei das eine Ende dieser Schaltung mit einer Lichtquelle gleichbleibender Stärke verbunden ist, während das gegenüberliegende Ende über einen Geber (14) mit einer elektronischen Einrichtung verbunden ist.

3. System nach Anspruch 1, dadurch gekennzeichnet, dass das Lichtbündel, das durch die Lichtleitfasern (31 ) geht, durch einen Filter (23) mit veränderlicher Lichtdurchlässigkeit aufgefangen wird, der mit einem winkelförmig beweglichen Glied (17) eines Aufnahmegeräts verbunden ist und dass die Winkelbewegungen des Filters (23) zu Änderungen der Lichtstärke in der Lichtleitfaser-Schaltung führen, wobei diese Änderungen durch die Änderungen der kontrollierten und fernübertragenen, in Digitalsignale umgewandelten Werte erzeugt werden.

4. System nach Anspruch 1, dadurch gekennzeichnet, dass ein Schaltnetzteil der Lichtquelle, der in einem Abstand von der Position der zu kontrollierenden Grösse positioniert ist, direkt mit Strom gespeist wird und entweder einem Lichtleitfaser-Bündel oder einer einzelnen Lichtleitfaser (19, 19a-119, 199a) zugeordnet ist, wobei diese Lichtquelle aus einer mit Niederspannung gespeisten Lampe besteht.

5. System nach Anspruch 1, dadurch gekennzeichnet, dass die der Lichtleitfaser-Schaltung zugeordnete Lichtquelle aus LED besteht, die in einem sichtbaren Band wirksam sind.

6. System nach Anspruch 1, dadurch gekennzeichnet, dass die der Lichtleitfaser-Schaltung zugeordnete Lichtquelle aus LED besteht, die in einem Infrarot-Band wirksam sind.

7. System nach Anspruch 1, dadurch gekennzeichnet, dass der Geber einen Halter (114-115) mit n koplanaren Kanälen für die gleiche Anzahl Lichtleitfasern (118-118a) umfasst, die im Bereich eines Fensters (114a-115a) des Halters durch die Interferenz eines durchscheinenden, einen Code (112) tragenden Schirmes (111) in Querrichtung unterbrochen sind, wobei dieser Schirm mit dem beweglichen Glied des Aufnahmegerätes verbunden ist.

## Revendications

1. Système à fibres optiques pour le relèvement instantané des variations des valeurs de différentes entités physiques (31), ce système est joint à une source lumineuse, comprenant un instrument de relèvement (16) pourvu d'un index mobile (17) qui est sensible aux variations de la valeur contrôlée, joint à un filtre (23) de transparence variable, qui intercepte le faisceau lumineux des fibres optiques, caractérisé par le fait que, tandis que le dispositif de relèvement est situé à l'intérieur des entités physiques contrôlées en valeurs absolues et en variations des valeurs, les données relatives sont transmises, à une distance de ladite position, grâce à un circuit à fibres optiques et en plus par un dispositif qui comprend:
- un alimentateur électrique situé à n'importe quelle distance de sécurité de la positon des entités à contrôler;
- une unité transducteur pour les signaux qui arrivent;
- un visualisateur (14) situé dans le siège des valeurs à contrôler;
- une console de contrôle (13) pour la lecture des données relevées.

2. Système selon la revendication 1, caractérisé par un circuit unipolaire de fibres optiques (31, 31a-31b) avec une extrémité du circuit susdit jointe à une source lumineuse d'intensité constante tandis que l'extrémité opposée est jointe, à l'aide d'un transducteur, (14) à un dispositif électronique.

3. Système selon la revendication 1, où le faisceau lumineux qui parcourt les fibres optiques (31) est intercepté par un filtre (23) de transparence variable joint à un goujon (17) qui suit un mouvement angulaire d'un instrument de relèvement dans lequel les mouvements angulaires du filtre (23) provoquent des variations de l'intensité lumineuse dans le circuit de fibres optiques; ces variations sont générées par les variations des valeurs contrôlées et transmises, à distance, transformées en signaux digitaux.

4. Système selon la revendication 1, caractérisé par une section d'alimentation électrique de la source lumineuse, située loin de la position de l'entité à contrôler; cette section est alimentée par un courant direct et elle est associée à un faisceau de fibres optiques ou bien à une seule fibre optique (19, 19a-119, 119a); c'est pour cela que ladite source est constituée par une lampe alimentée à une basse tension.

5. Système selon la revendication 1, où la source lumineuse, associée au,circuit de fibres optiques, est constituée par LEDs qui agissent dans une bande visible.

6. Système selon la revendication 1, où la source lumineuse est constituée par LEDs qui agissent dans une bande infrarouge.

7. Système selon la revendication 1, caractérisé par un transducteur qui comprend un support (114-115) avec-n-canaux coplanaires pour le même nombre de fibres optiques (118-118a) interrompus transversalement en correspondance d'une fenêtre (114a-115a) du support où interfère un écran transparent (111) qui a un code (112); étant l'écran susdit joint au goujon mobile de l'instrument de relèvement.
